# DEMANDE DE BREVET EUROPEEN

(11) **EP 4 817 481 A1**
(43) Date de publication de la demande: **07.10.2026**
(21) Numéro de dépôt: 26163858.9
(22) Date de dépôt: 11.03.2026
(51) Int. Cl.: A47J 36/06, A47J 37/12

(54) **APPAREIL DE CUISSON ELECTRIQUE A BAIN DE CUISSON AVEC BAC DE COLLECTE DE CONDENSATS**

(30) Priorité: 01.04.2025 FR 2503399
(71) Demandeur: SEB S.A., 69130 Ecully (FR)
(72) Inventeur: RENAUD, David, 69134 Ecully Cedex (FR); SEURAT, Frédéric, 69134 Ecully Cedex (FR)
(74) Mandataire: SEB Développement

(57) **Abrégé**

L'invention concerne un appareil de cuisson électrique (1) à bain de cuisson comportant un boîtier (2) comportant une cuve de cuisson (3), un couvercle (4) mobile autour d'un axe de pivotement entre une position d'ouverture et une position de fermeture, un dispositif de chauffage configuré pour chauffer le bain de cuisson, et un bac de collecte de condensat comportant un bord périphérique supérieur qui délimite une ouverture supérieure. Le bac de collecte de condensat est configuré pour faire saillie au-delà d'une paroi latérale du boîtier (2) de telle sorte qu'une portion de l'ouverture supérieure du bac de collecte de condensat est située au-delà de ladite paroi latérale du boîtier (2). Ainsi, le bac de collecte de condensat est configuré pour collecter des condensats s'écoulant depuis au moins un orifice externe de l'appareil de cuisson électrique (1) situé à l'aplomb de ladite portion de l'ouverture supérieure du bac de collecte de condensat.

## Description

### Domaine technique

La présente invention concerne le domaine technique des appareils électroménagers de cuisson comprenant une cuve de cuisson et un couvercle. Plus particulièrement, la présente invention concerne la récupération des condensats générés lors de l'utilisation d'appareil de cuisson électrique à bain de cuisson.

### Etat de la technique

Il est connu de l'art antérieur d'utiliser un appareil de cuisson électrique à bain de cuisson configuré pour la cuisson d'aliment et comportant :
- un boîtier comportant une cuve de cuisson configurée pour recevoir un bain de cuisson ;
- un couvercle mobile autour d'un axe de pivotement entre une position d'ouverture dans laquelle le couvercle autorise un accès à la cuve de cuisson, et une position de fermeture dans laquelle le couvercle empêche l'accès à la cuve de cuisson et délimite, avec la cuve de cuisson, une chambre de cuisson ;
- un dispositif de chauffage configuré pour chauffer le bain de cuisson ; et
- un bac de collecte de condensat comportant un bord périphérique supérieur qui délimite une ouverture supérieure.

Un tel dispositif permet à un utilisateur de réaliser la cuisson d'aliments dans un bain de cuisson, tel que de l'huile par exemple, et ceci dans une chambre de cuisson qui est délimitée en partie par le couvercle.

Cependant, un tel appareil de cuisson électrique présente des inconvénients majeurs, l'un des inconvénients étant l'écoulement des condensats, générés lors de la cuisson des aliments dans le bain de cuisson, à l'extérieur de l'appareil de cuisson électrique lors du déplacement du couvercle vers la position d'ouverture. En effet, le couvercle d'un tel appareil de cuisson comporte généralement un orifice d'évacuation de vapeur configuré pour autoriser une évacuation, vers l'extérieur de l'appareil de cuisson électrique, de la vapeur formée lors de la cuisson des aliments. Or, lors de l'ouverture du couvercle par l'utilisateur, une partie des condensats présents dans le couvercle, est susceptible de s'écouler à l'extérieur de l'appareil de cuisson électrique via l'orifice d'évacuation de vapeur, lesdits condensats se répandant alors sur la surface de travail sur laquelle est positionné l'appareil de cuisson électrique et/ou s'écoulant sur une surface externe du boîtier. Lesdits condensats étant composés en partie de jus de cuisson, leur évacuation via l'orifice d'évacuation de vapeur est donc susceptibles de salir la surface de travail et la surface externe du boîtier.

### Résumé de l'invention

Le problème technique à la base de l'invention consiste donc à fournir un appareil de cuisson électrique, conformé pour la cuisson d'aliments dans un bain de cuisson, qui soit de structure simple, compacte et économique, tout en permettant la récupération des condensats susceptibles de s'écouler à l'extérieur l'appareil de cuisson électrique.

A cet effet, la présente invention concerne un appareil de cuisson électrique à bain de cuisson, tel qu'une friteuse électrique à bain d'huile par exemple, configuré pour la cuisson d'aliment et comportant :
- un boîtier comportant une cuve de cuisson configurée pour recevoir un bain de cuisson ;
- un couvercle mobile autour d'un axe de pivotement entre une position d'ouverture dans laquelle le couvercle autorise un accès à la cuve de cuisson, et une position de fermeture dans laquelle le couvercle empêche l'accès à la cuve de cuisson et délimite, avec la cuve de cuisson, une chambre de cuisson ;
- un dispositif de chauffage configuré pour chauffer le bain de cuisson ; et
- un bac de collecte de condensat comportant un bord périphérique supérieur qui délimite une ouverture supérieure ;
dans lequel le bac de collecte de condensat est configuré pour faire saillie au-delà d'une paroi latérale du boîtier de telle sorte qu'une portion de l'ouverture supérieure du bac de collecte de condensat est située au-delà de ladite paroi latérale du boîtier, le bac de collecte de condensat étant configuré pour collecter des condensats s'écoulant depuis au moins un orifice externe de l'appareil de cuisson électrique situé à l'aplomb de ladite portion de l'ouverture supérieure du bac de collecte de condensat.

En d'autres termes, le bord périphérique supérieur du bac de collecte de condensat comporte une portion de bord configurée pour être en saillie par rapport à la paroi latérale du boîtier, de telle sorte que l'ouverture supérieure du bac de collecte de condensat s'étend en partie au-delà de ladite paroi latérale du boîtier.

Par faire saillie au-delà de la paroi latérale du boîtier, on entend que le bac de collecte de condensat dépasse horizontalement de la paroi latérale du boîtier et fait saillie vers l'extérieur de l'appareil de cuisson électrique.

Dans le présent document, on entend par « orifice externe » un orifice qui débouche dans une surface externe de l'appareil de cuisson électrique.

Une telle configuration de l'appareil de cuisson électrique selon la présente invention, et en particulier du bac de collecte de condensat, permet de collecter les condensats générés par la cuisson des aliments et susceptibles de s'écouler gravitairement à l'extérieur de l'appareil de cuisson électrique via l'au moins un orifice externe, et donc d'éviter que les condensats et jus de cuisson ne se répandent sur le plan de travail ou sur la surface sur laquelle repose le boîtier.

L'appareil de cuisson électrique peut en outre présenter une ou plusieurs des caractéristiques suivantes, qui peuvent être prises seules ou en combinaison.

Selon un mode de réalisation de l'invention, l'au moins un orifice externe comporte au moins un orifice d'évacuation de vapeur, tel qu'une lumière d'évacuation de vapeur par exemple, prévu sur le couvercle et configuré pour être relié fluidiquement à la chambre de cuisson lorsque le couvercle est dans la position de fermeture, l'au moins un orifice d'évacuation de vapeur étant configuré pour s'étendre au moins en partie à l'aplomb de ladite portion de l'ouverture supérieure du bac de collecte de condensat lorsque le couvercle est dans la position d'ouverture.

Le bac de collecte de condensat est notamment configuré pour récupérer les condensats susceptibles de s'écouler à l'extérieur du boîtier via l'au moins un orifice d'évacuation de vapeur, lorsque le couvercle est dans la position d'ouverture.

Selon un mode de réalisation de l'invention, le couvercle comporte une pluralité d'orifices d'évacuation de vapeur, qui sont par exemple disposés dans une partie arrière du couvercle.

Selon un mode de réalisation de l'invention, l'appareil de cuisson électrique comporte un circuit d'évacuation de vapeur configuré pour guider un flux de vapeur, provenant de la chambre de cuisson, depuis la chambre de cuisson jusqu'à l'au moins un orifice d'évacuation de vapeur.

Selon un mode de réalisation de l'invention, le circuit d'évacuation de vapeur est prévu dans le couvercle.

Selon un mode de réalisation de l'invention, le circuit d'évacuation de vapeur comporte un dispositif de guidage de flux disposé dans le couvercle et comprenant une paroi de guidage supérieure et une paroi de guidage inférieure délimitant entre elles un passage d'écoulement en chicane relié fluidiquement à l'au moins un orifice d'évacuation de vapeur. Une telle configuration de l'appareil de cuisson électrique, et plus particulièrement du dispositif de guidage de flux, permet, lorsque le couvercle est dans la position de fermeture, de générer un obstacle destiné à ralentir et à détourner le flux de vapeur. De façon avantageuse, le passage d'écoulement en chicane permet de favoriser la séparation entre les condensats et le flux de vapeur provenant de la chambre de cuisson.

Selon un mode de réalisation de l'invention, le circuit d'évacuation de vapeur comporte une chambre interne dans laquelle est disposé le dispositif de guidage de flux.

Selon un mode de réalisation de l'invention, l'au moins un orifice d'évacuation de vapeur débouche dans la chambre interne.

Selon un mode de réalisation de l'invention, l'au moins un orifice d'évacuation de vapeur est allongé et comporte une extrémité inférieure configurée pour s'étendre à l'aplomb du bac de collecte de condensat lorsque le couvercle est dans la position d'ouverture. De façon avantageuse, ladite extrémité inférieure représente le point le plus bas de l'au moins un orifice d'évacuation de vapeur lorsque le couvercle occupe la position d'ouverture.

Selon un mode de réalisation de l'invention, le couvercle comporte au moins une nervure périphérique qui s'étend depuis une surface interne du couvercle et sur le pourtour de l'au moins un orifice d'évacuation de vapeur.

Selon un mode de réalisation de l'invention, l'au moins un orifice d'évacuation de vapeur est configuré pour s'étendre sensiblement verticalement lorsque le boîtier repose sur une surface horizontale et que le couvercle est dans la position de fermeture.

Selon un mode de réalisation de l'invention, l'au moins un orifice d'évacuation de vapeur comporte une paroi inférieure qui est inclinée vers le bas et vers l'intérieur de la chambre interne lorsque le couvercle est dans la position de fermeture. Une telle configuration de l'invention permet avantageusement de limiter la quantité de condensat susceptible de s'écouler par l'au moins un orifice d'évacuation de vapeur lorsque le couvercle est dans la position de fermeture.

Selon un mode de réalisation de l'invention, le couvercle comporte une pluralité de nervures périphériques s'étendant chacune sur le pourtour d'un orifice d'évacuation de vapeur respectif et configurées pour délimiter des canaux d'écoulement de condensat entre les orifices d'évacuation de vapeur. Une telle configuration de l'appareil de cuisson électrique permet avantageusement de guider les condensats jusqu'à une portion inférieure de la chambre interne lorsque le couvercle est dans la position d'ouverture.

Selon un mode de réalisation de l'invention, l'au moins un orifice externe comporte au moins un orifice de sortie latéral prévu sur le boîtier et débouchant dans une surface externe du boîtier.

Selon un mode de réalisation de l'invention, l'au moins un orifice de sortie latéral est ménagé dans une paroi latérale du boîtier.

Selon un mode de réalisation de l'invention, le bac de collecte de condensat est amovible par rapport au boîtier. Une telle configuration du bac de collecte de condensat permet avantageusement de vidanger le contenu du bac de collecte de condensat aisément et sans manipulation de l'ensemble de l'appareil de cuisson électrique.

Selon un mode de réalisation de l'invention, le boîtier comporte un logement de réception configuré pour loger au moins en partie le bac de collecte de condensat. De façon avantageuse, le logement de réception est situé dans une partie arrière du boîtier.

Selon un mode de réalisation de l'invention, le bac de collecte de condensat comporte une paroi de fond, l'ouverture supérieure du bac de collecte de condensat présentant une section de passage qui est supérieure à la superficie de la paroi de fond. En d'autres termes, le bac de collecte de condensat est évasé en direction de l'ouverture supérieure.

Selon un mode de réalisation de l'invention, le bac de collecte de condensat est prévu dans la partie arrière du boîtier.

Selon un mode de réalisation de l'invention, le couvercle comporte un support de charnière comportant au moins en partie une liaison pivot configurée pour autoriser un pivotement du couvercle entre la position de fermeture et la position d'ouverture.

Selon un mode de réalisation de l'invention, le support de charnière est monté de manière amovible sur le boîtier, de telle sorte que le couvercle est amovible par rapport au boîtier. Une telle configuration de l'invention permet avantageusement un retrait du couvercle afin de simplifier son nettoyage par exemple.

Selon un mode de réalisation de l'invention, l'au moins un orifice de sortie latéral est prévu sur le support de charnière.

Selon un mode de réalisation de l'invention, le support de charnière comporte une première partie de fixation, et le boîtier comporte une deuxième partie de fixation configurée pour coopérer par complémentarité de forme avec la première partie de fixation.

Selon un mode de réalisation de l'invention, la première partie de fixation comporte au moins un doigt de fixation, et la deuxième partie de fixation comporte au moins un orifice de fixation dans lequel l'au moins un doigt de fixation est apte à être au moins en partie reçu.

Selon un mode de réalisation de l'invention, l'appareil de cuisson électrique comporte :
- un dispositif de collecte configuré pour s'étendre au moins en partie à l'intérieur de la chambre de cuisson et pour collecter, lorsque le couvercle est dans la position de fermeture, des condensats provenant de la cuisson des aliments, le dispositif de collecte comprenant au moins un orifice d'évacuation, et
- un circuit d'acheminement de condensat relié fluidiquement à l'au moins un orifice d'évacuation et configuré pour acheminer des condensats provenant de l'au moins un orifice d'évacuation jusqu'au bac de collecte de condensat.

Selon un mode de réalisation de l'invention, l'au moins un orifice externe est relié fluidiquement au circuit d'acheminement de condensat.

Selon un mode de réalisation de l'invention, l'appareil de cuisson électrique comporte une fenêtre de visualisation, telle qu'un hublot, prévue sur le couvercle et configurée pour permettre à un utilisateur de visualiser le contenu de la chambre de cuisson lorsque le couvercle est dans la position de fermeture.

Selon un mode de réalisation de l'invention, la fenêtre de visualisation est au moins en partie transparente au rayonnement lumineux, et peut par exemple être réalisée au moins en partie en un matériau pouvant être une matière synthétique transparente, tel qu'un polymère de type polycarbonate par exemple, ou une matière minérale transparente, tel que du verre, du verre borosilicate, du cristal ou du quartz par exemple.

Selon un mode de réalisation de l'invention, le dispositif de collecte comporte un canal de collecte prévu sur le couvercle, le canal de collecte comportant une portion de collecte configurée pour être située au moins en partie à l'aplomb d'une zone d'écoulement, située dans la périphérie de la fenêtre de visualisation, et pour collecter des condensats s'écoulant depuis la fenêtre de visualisation lorsque le couvercle est en position de fermeture, et une portion de guidage configurée pour guider les condensats, collectés par la portion de collecte, à l'extérieur de la chambre de cuisson lorsque le couvercle est déplacé vers la position d'ouverture.

Selon un mode de réalisation de l'invention, le canal de collecte est fixé au couvercle, de telle sorte qu'il est solidaire en pivotement avec le couvercle.

Selon un mode de réalisation de l'invention, le canal de collecte comporte l'au moins un orifice d'évacuation, la portion de guidage étant configurée pour guider des condensats collectés par le canal de collecte jusqu'à l'au moins un orifice d'évacuation.

Selon un mode de réalisation de l'invention, l'au moins un orifice d'évacuation est prévu dans une partie arrière du couvercle.

Selon un mode de réalisation de l'invention, l'au moins un orifice d'évacuation est configuré pour être le point le plus bas du canal de collecte lorsque le couvercle est dans la position d'ouverture.

Selon un mode de réalisation de l'invention, le circuit d'acheminement de condensat comporte une chambre de collecte reliée fluidiquement à l'au moins un orifice d'évacuation et configurée pour collecter les condensats provenant de l'au moins un orifice d'évacuation.

Selon un mode de réalisation de l'invention, la chambre de collecte loge au moins en partie la liaison pivot (et par exemple au moins en partie un arbre de pivotement appartenant à ladite liaison pivot) configurée pour autoriser le pivotement du couvercle entre la position de fermeture et la position d'ouverture.

Selon un mode de réalisation de l'invention, la chambre de collecte est prévue dans le couvercle (et par exemple dans une partie arrière du couvercle). En d'autres termes, la chambre de collecte est solidaire en pivotement avec le couvercle.

Selon un mode de réalisation de l'invention, l'axe de pivotement du couvercle est situé dans une partie arrière du boîtier.

Selon un mode de réalisation de l'invention, l'axe de pivotement est sensiblement horizontal lorsque le boîtier repose sur une surface horizontale.

Selon un mode de réalisation de l'invention, la chambre de collecte comporte au moins un orifice de drainage.

Selon un mode de réalisation de l'invention, le circuit d'acheminement de condensat comporte une chambre intermédiaire prévue dans le boîtier et configurée pour recevoir des condensats s'écoulant depuis la chambre de collecte.

Selon un mode de réalisation de l'invention, la chambre intermédiaire est configurée pour s'étendre à l'aplomb de la chambre de collecte, et plus particulièrement à l'aplomb de l'au moins un orifice de drainage, de telle sorte que les condensats sont aptes à s'écouler depuis la chambre de collecte jusqu'à la chambre intermédiaire à travers l'au moins un orifice de drainage.

Selon un mode de réalisation de l'invention, la chambre intermédiaire comprend au moins un orifice de sortie inférieur configuré pour autoriser un écoulement des condensats depuis la chambre intermédiaire jusque dans le bac de collecte de condensat.

Selon un mode de réalisation de l'invention, le circuit d'acheminement de condensat comporte un orifice de sortie inférieur configuré pour autoriser un écoulement des condensats depuis le circuit d'acheminement de condensat jusque dans le bac de collecte de condensat.

Selon un mode de réalisation de l'invention, l'orifice de sortie inférieur est configuré pour s'étendre à l'aplomb, et par exemple en regard, de l'ouverture supérieure du bac de collecte de condensat.

Selon un mode de réalisation de l'invention, la chambre intermédiaire est prévue dans la partie arrière du boîtier.

Selon un mode de réalisation de l'invention, le support de charnière est monté dans la chambre intermédiaire et délimite en partie le circuit d'acheminement de condensat.

Selon un mode de réalisation de l'invention, la deuxième partie de fixation est prévue dans la chambre intermédiaire.

Selon un mode de réalisation de l'invention, l'au moins un orifice de drainage de la chambre de collecte est configuré pour s'étendre sensiblement à l'aplomb de la chambre intermédiaire et est configuré pour autoriser un écoulement des condensats depuis la chambre de collecte vers la chambre intermédiaire.

Selon un mode de réalisation de l'invention, la chambre intermédiaire est configurée pour s'étendre au moins en partie à l'aplomb et en dessous de la chambre de collecte.

Selon un mode de réalisation de l'invention, la chambre intermédiaire comporte l'au moins un orifice de sortie latéral, le bac de collecte de condensat étant configuré pour collecter d'éventuels condensats s'écoulant par gravité depuis l'au moins un orifice de sortie latéral.

Selon un mode de réalisation de l'invention, lorsque le couvercle est dans la position d'ouverture et que le boîtier repose sur une surface horizontale, le couvercle est incliné selon un angle strictement inférieur à 90°, et par exemple strictement inférieur à 80°, par rapport à un axe vertical. Une telle configuration de l'invention permet d'assurer un écoulement des condensats depuis le dispositif de collecte jusqu'au circuit d'acheminement de condensat lorsque le couvercle occupe la position d'ouverture.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue en perspective d'un appareil de cuisson électrique selon un mode de réalisation de l'invention et comportant un couvercle dans une position d'ouverture ;
[Fig 2] est une vue en perspective de l'appareil de cuisson électrique de la figure 1 dans lequel le couvercle est dans une position de fermeture ;
[Fig 3] est une vue partielle en perspective de l'appareil de cuisson électrique de la figure 1 ;
[Fig 4] est une vue partielle en perspective, tronquée selon un premier plan de coupe vertical, d'une partie arrière de l'appareil de cuisson électrique de la figure 1 ;
[Fig 5] est une vue partielle en perspective, tronquée selon un deuxième plan de coupe vertical décalé par rapport au premier plan de coupe vertical, de la partie arrière de l'appareil de cuisson électrique de la figure 4 ;
[Fig 6] est une vue partielle en perspective, tronquée selon un troisième plan de coupe vertical décalé par rapport au premier et au deuxième plan de coupe verticale, de la partie arrière de l'appareil de cuisson électrique de la figure 5 ;
[Fig 7] est une vue en perspective d'une paroi interne du couvercle de l'appareil de cuisson électrique de la figure 1 ;
[Fig 8] est une vue partielle en perspective de la partie arrière de l'appareil de cuisson électrique de la figure 5, représentant un dispositif de collecte, le circuit d'acheminement de condensat et le bac de collecte de condensat ;
[Fig 9] est une vue partielle en perspective, tronquée selon le deuxième plan de coupe vertical et représentant la partie arrière de l'appareil de cuisson électrique de la figure 5 ;
[Fig 10] est une vue partielle en perspective du couvercle de la figure 7, laquelle intègre un dispositif de guidage de flux.

### Description détaillée

Dans le présent document, les termes « avant », « arrière », « supérieur » et « inférieur » sont définis par rapport à une utilisation normale de l'appareil de cuisson électrique durant laquelle le boîtier repose sur une surface horizontale.

A défaut de stipulation contraire, le terme « sensiblement » signifie, dans le présent document, « exactement ou à 10% ou à 10° près ».

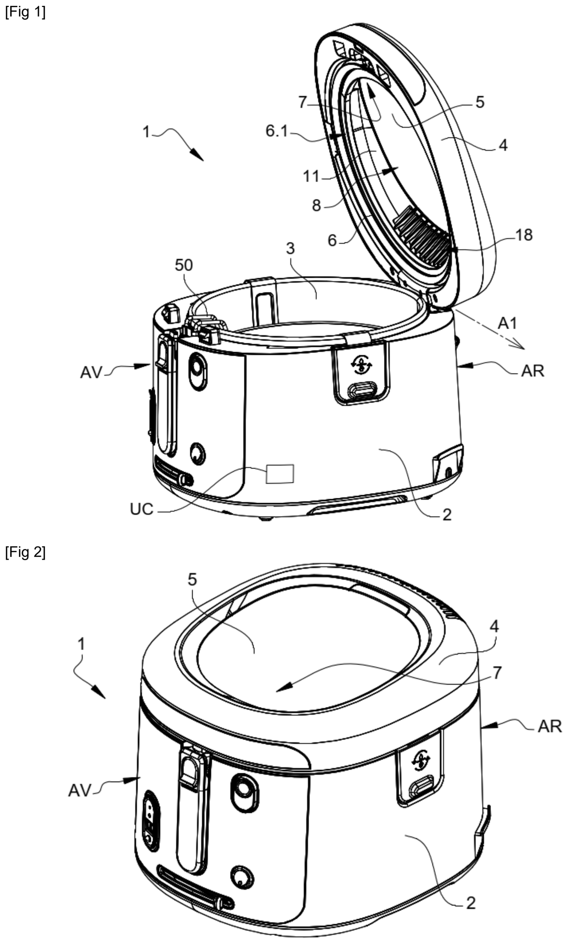

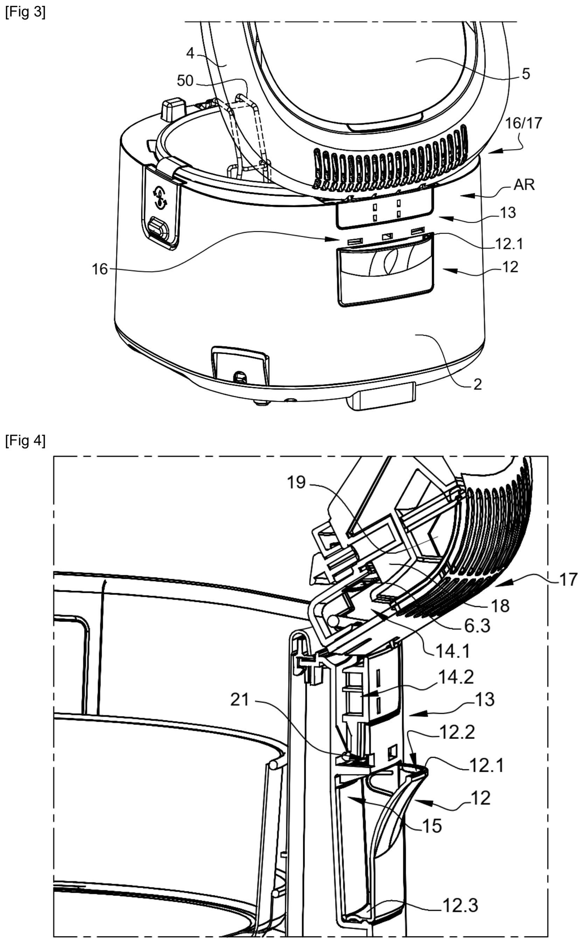

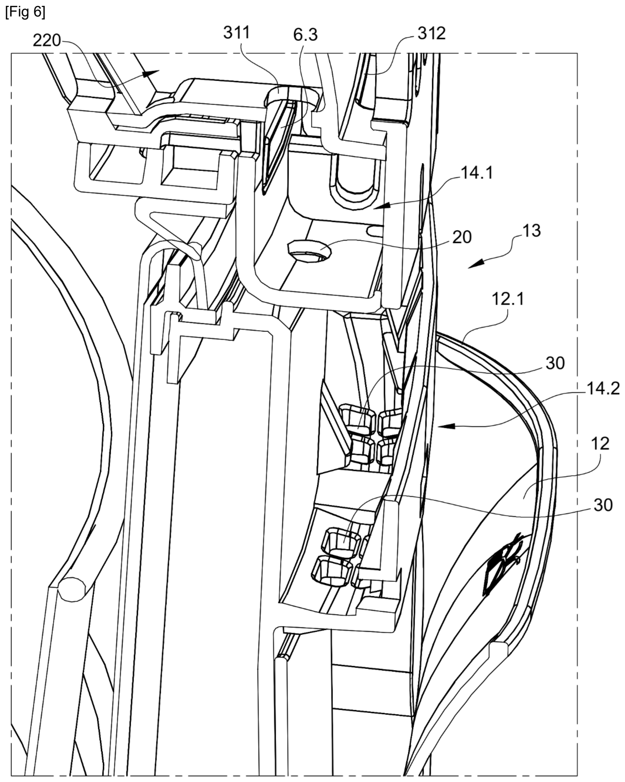

Les figures 1 à 10 représentent tout ou partie d'un appareil de cuisson électrique 1, tel qu'une friteuse électrique à bain d'huile par exemple, configuré pour cuire des aliments et selon un mode de réalisation de l'invention. L'appareil de cuisson électrique 1 comprend notamment un boîtier 2 comportant une cuve de cuisson 3 configurée pour recevoir un bain de cuisson, un couvercle 4 mobile entre une position de fermeture et une position d'ouverture, et un dispositif de chauffage 50 (voir figures 1 et 3) configuré pour chauffer le bain de cuisson. En outre, l'appareil de cuisson électrique 1 comporte une unité de commande UC prévue dans le boîtier 2 et configurée pour commander le fonctionnement de l'appareil de cuisson électrique 1.

De façon avantageuse, le couvercle 4 est monté pivotant par rapport au boîtier 2 autour d'un axe de pivotement A1 entre la position de fermeture dans laquelle le couvercle 4 délimite, avec la cuve de cuisson 3, une chambre de cuisson et empêche un accès à la cuve de cuisson 3, et la position d'ouverture dans laquelle le couvercle 4 autorise l'accès à la cuve de cuisson. Selon le mode de réalisation représenté sur les figures 1 à 10, l'axe de pivotement A1 est situé dans une partie arrière AR du boîtier 2, et est sensiblement horizontal lorsque le boîtier 2 repose sur une surface horizontale.

L'appareil de cuisson électrique 1 comporte en outre une fenêtre de visualisation 5, telle qu'un hublot, prévue sur le couvercle 4 et configurée pour permettre à un utilisateur de visualiser le contenu de la chambre de cuisson lorsque le couvercle 4 est dans la position de fermeture, et un dispositif de collecte 6 configuré pour s'étendre en partie à l'intérieur de la chambre de cuisson et comprenant un canal de collecte 6.1 configuré pour collecter des condensats formés sur la fenêtre de visualisation 5 et s'écoulant depuis une zone d'écoulement 7 de la fenêtre de visualisation 5 lorsque le couvercle 4 est dans la position de fermeture. En outre, le dispositif de collecte 6 est configuré pour guider les condensats collectés jusqu'à l'extérieur de la chambre de cuisson. Avantageusement, la zone d'écoulement 7 est située dans une partie avant du couvercle 4.

Plus particulièrement, la fenêtre de visualisation 5 est transparente au rayonnement lumineux, et peut par être réalisée en un matériau conforme à une utilisation dans un appareil de cuisson électrique 1 ; ledit matériau pouvant être une matière synthétique transparente tel qu'un polymère de type polycarbonate par exemple, ou une matière minérale transparente tel que du verre, du verre borosilicate, du cristal ou du quartz par exemple.

Selon le mode de réalisation de l'invention, la fenêtre de visualisation 5, et plus précisément une paroi interne 8 de la fenêtre de visualisation 5, est sensiblement plane et est inclinée vers le bas et en direction d'une face avant AV du boîtier 2 ; la zone d'écoulement 7 de la fenêtre de visualisation 5 étant la portion périphérique la plus basse de la fenêtre de visualisation 5 lorsque le couvercle 4 est dans la position de fermeture et que le boîtier 2 repose sur une surface horizontale. Avantageusement, la fenêtre de visualisation 5 est inclinée par rapport à l'horizontal selon un angle d'inclinaison supérieur à 5 degrés, avantageusement supérieur à 6 degrés, et par exemple supérieur à 8 degrés, lorsque le couvercle 4 est dans la position de fermeture et que le boîtier 2 repose sur une surface horizontale. Une telle configuration de l'appareil de cuisson électrique 1 permet à l'utilisateur d'avoir une visibilité accrue du contenu de la chambre de cuisson, tout en assurant un écoulement efficace des condensats depuis la fenêtre de visualisation 5 jusqu'au canal de collecte 6.1, en évitant que les condensats ne tombent par gravité dans le bain de cuisson avant d'atteindre la zone d'écoulement 7.

Le canal de collecte 6.1, représenté plus spécifiquement sur la figure 1, est solidaire en pivotement avec le couvercle 4, et comporte une portion de collecte comportant une ouverture supérieure configurée pour être située au moins en partie à l'aplomb de la zone d'écoulement 7 de manière à autoriser un écoulement gravitaire des condensats depuis la zone d'écoulement 7 de la fenêtre de visualisation 5 jusqu'à l'intérieur du volume défini par la portion de collecte, lorsque le couvercle 4 est en position de fermeture. Le canal de collecte 6.1 comporte en outre une portion de guidage configurée pour guider les condensats, collectés par la portion de collecte, à l'extérieur de la chambre de cuisson lorsque le couvercle 4 est déplacé vers la position d'ouverture. Une telle configuration de l'appareil de cuisson électrique 1 permet avantageusement de récupérer les condensats, générés sur la paroi interne 8 de la fenêtre de visualisation 5 lors de la cuisson d'aliments, au niveau de la portion de collecte du canal de collecte 6.1. Ainsi, les condensats sont récupérés avant qu'ils ne retombent dans le bain de cuisson, ce qui permet de prévenir des projections du liquide à haute température composant le bain de cuisson à l'extérieur du boîtier 2 et potentiellement sur l'utilisateur.

Selon le mode de réalisation de l'invention, le canal de collecte 6.1 est annulaire et s'étend sensiblement sur le pourtour de la cuve de cuisson 3 lorsque le couvercle 4 est dans la position de fermeture. La portion de collecte peut par exemple présenter une largeur supérieure à la largeur de la portion de guidage afin de maximiser la récupération des condensats s'écoulant depuis la fenêtre de visualisation 5. Le canal de collecte 6.1 peut être monobloc, c'est-à-dire être réalisé en une seule pièce, et comporte au moins un orifice d'évacuation 6.3 prévu dans une partie arrière du couvercle 4, la portion de guidage étant configurée pour guider des condensats collectés par le canal de collecte 6.1 jusqu'à l'au moins un orifice d'évacuation 6.3. Avantageusement, l'au moins un orifice d'évacuation 6.3 est configuré pour être le point le plus bas du canal de collecte 6.1 lorsque le couvercle 4 est dans la position d'ouverture.

Selon le mode de réalisation de l'invention, la portion de guidage du canal de collecte 6.1 est contiguë à la portion de collecte, c'est-à-dire s'étend dans le prolongement de la portion de collecte. Avantageusement, la portion de guidage est située à une altitude inférieure à celle de la portion de collecte lorsque le couvercle 4 occupe la position de fermeture, de sorte à autoriser un écoulement gravitaire des condensats depuis la portion de collecte jusqu'à la portion de guidage lorsque le couvercle 4 est dans la position de fermeture et que le boîtier 2 repose sur une surface horizontale.

Selon le mode de réalisation de l'invention, la portion de guidage s'étend selon un plan d'extension qui est sensiblement horizontal lorsque le boîtier 2 repose sur une surface horizontale et que le couvercle 4 est dans la position de fermeture. Alternativement, la portion de guidage pourrait s'étendre selon un plan d'extension qui est incliné en direction de la partie arrière AR du boîtier 2 lorsque le boîtier 2 repose sur une surface horizontale et que le couvercle 4 est dans la position de fermeture. Une telle configuration permet d'éviter l'accumulation des condensats à l'avant de la portion de guidage.

La portion de guidage forme un conduit de guidage, c'est-à-dire un canal de guidage à section fermée. Une telle configuration de l'invention permet d'éviter que les condensats présents dans le canal de collecte 6.1 ne s'accumulent et ne débordent de la portion de guidage et ne retombent dans le bain de cuisson lorsque le couvercle 4 est déplacé vers la position d'ouverture après un cycle de cuisson par exemple. En effet, lors de l'ouverture du couvercle 4, les condensats vont, sous l'effet de la gravité, être convoyés simultanément vers le point le plus bas du canal de collecte 6.1, en l'occurrence la portion de guidage, ce qui pourrait conduire à un débordement localisé des condensats dans le cas où la portion de guidage présente une ouverture supérieure par exemple.

L'appareil de cuisson électrique 1 comporte en outre un bac de collecte de condensat 12 (voir figures 3 à 6), comportant un bord périphérique supérieur 12.1 qui délimite une ouverture supérieure 12.2, et un circuit d'acheminement de condensat 13 relié fluidiquement à l'au moins un orifice d'évacuation 6.3 et configuré pour acheminer des condensats provenant de l'au moins un orifice d'évacuation 6.3 jusqu'au bac de collecte de condensat 12. En outre, lorsque le couvercle 4 est dans la position d'ouverture et que le boîtier 2 repose sur une surface horizontale, le couvercle 4 est incliné selon un angle strictement inférieur à 90°, et par exemple strictement inférieur à 80°, par rapport à un axe vertical. Une telle configuration de l'invention permet d'assurer un écoulement des condensats depuis le dispositif de collecte 6 jusqu'au circuit d'acheminement de condensat 13, et finalement jusqu'au bac de collecte de condensat 12 lorsque le couvercle 4 est déplacé dans la position d'ouverture.

De façon avantageuse, et comme représenté sur les figures 4 à 6, le circuit d'acheminement de condensat 13 comporte une chambre de collecte 14.1, prévue dans le couvercle 4 (et par exemple dans une partie arrière du couvercle 4), qui est reliée fluidiquement à l'au moins un orifice d'évacuation 6.3 et est configurée pour collecter les condensats provenant de l'au moins un orifice d'évacuation 6.3. La chambre de collecte 14.1 est en outre configurée pour loger au moins en partie la liaison pivot du couvercle 4, et en particulier l'arbre de pivotement appartenant à ladite liaison pivot.

Le circuit d'acheminement de condensat 13 comporte en outre une chambre intermédiaire 14.2, prévue dans une partie arrière du boîtier 2, et configurée pour s'étendre en dessous de la chambre de collecte 14.1.

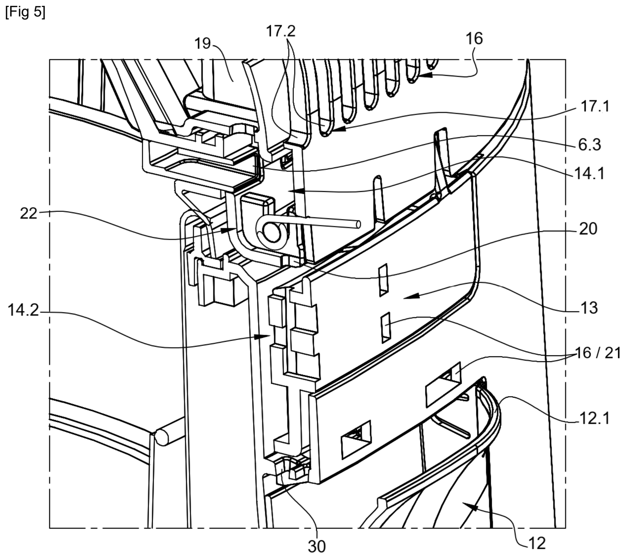

Selon le mode de réalisation de l'invention, et comme représenté plus spécifiquement sur la figure 5, la chambre de collecte 14.1 comporte au moins un orifice de drainage 20 prévu dans une paroi inférieure de la chambre de collecte 14.1 et configuré pour s'étendre sensiblement à l'aplomb de la chambre intermédiaire 14.2 lorsque le boîtier 2 repose sur une surface sensiblement horizontale, de telle sorte que la chambre intermédiaire 14.2 est reliée fluidiquement à la chambre de collecte 14.1. La chambre intermédiaire 14.2 comporte au moins un orifice de sortie inférieur 30 prévu dans une paroi inférieure de la chambre intermédiaire 14.2 et configuré pour s'étendre sensiblement à l'aplomb, et par exemple en regard, de l'ouverture supérieure 12.2 du bac de collecte de condensat 12 lorsque le boîtier 2 repose sur une surface sensiblement horizontale. Avantageusement, l'au moins un orifice de drainage 20 et l'au moins un orifice de sortie inférieur 30 sont respectivement configurés pour autoriser un écoulement par gravité des condensats depuis la chambre de collecte 14.1 vers la chambre intermédiaire 14.2, et pour autoriser un écoulement par gravité des condensats depuis la chambre intermédiaire 14.2 vers le bac de collecte de condensat 12.

Avantageusement, le bac de collecte de condensat 12 est prévu dans la partie arrière AR du boîtier 2, et plus précisément dans un logement de réception 15 du boîtier 2, et est amovible par rapport au boîtier 2. Une telle configuration du bac de collecte de condensat 12 permet avantageusement de vidanger le contenu du bac de collecte de condensat 12 aisément et sans manipulation de l'ensemble de l'appareil de cuisson électrique.

Le bord périphérique supérieur 12.1 du bac de collecte de condensat 12, qui délimite l'ouverture supérieure 12.2, est configuré pour faire saillie au-delà d'une paroi latérale du boîtier 2 de telle sorte qu'une portion de l'ouverture supérieure 12.2 du bac de collecte de condensat 12 est située au-delà de ladite paroi latérale du boîtier 2. Ainsi, le bac de collecte de condensat 12 est configuré pour collecter des condensats s'écoulant depuis des orifices externes 16 de l'appareil de cuisson électrique 1 situé à l'aplomb de ladite portion de l'ouverture supérieure 12.2 du bac de collecte de condensat 12. En d'autres termes, le bord périphérique supérieur 12.1 du bac de collecte de condensat 12 comporte une portion de bord configurée pour être en saillie par rapport à la paroi latérale du boîtier 2, de telle sorte que l'ouverture supérieure 12.2 du bac de collecte de condensat 12 s'étend en partie au-delà de ladite paroi latérale du boîtier 2. Par « faire saillie au-delà de la paroi latérale du boîtier 2 », on entend que le bac de collecte de condensat 12 dépasse horizontalement de la paroi latérale du boîtier 2 et fait saillie vers l'extérieur de l'appareil de cuisson électrique 1. Une telle configuration de l'appareil de cuisson électrique 1 permet de récupérer les condensats générés par la cuisson des aliments et s'écoulant gravitairement à l'extérieur du volume délimité par l'appareil de cuisson électrique 1 et au travers de l'au moins un orifice externe 16, lors du déplacement du couvercle 4 vers la position d'ouverture ; la configuration spécifique bac de collecte de condensat 12 permettant de collecter les condensats s'écoulant à l'extérieur de l'appareil de cuisson électrique 1. Avantageusement, une telle configuration de l'invention permet d'éviter que les condensats et jus de cuisson ne se répandent sur la surface de travail sur laquelle est positionné l'appareil de cuisson électrique 1 et / ou ne s'écoulent sur une surface externe du boîtier 2. Lesdits condensats étant composés en partie de jus de cuisson, leur évacuation via l'orifice d'évacuation de vapeur est donc susceptibles de salir la surface de travail et la surface externe du boîtier. Avantageusement, et afin de limiter l'encombrement de l'appareil de cuisson électrique, l'ouverture supérieure 12.2 du bac de collecte de condensat 12 présente une section de passage qui est supérieure à la superficie de la paroi de fond 12.3 du bac de collecte de condensat 12. En d'autres termes, le bac de collecte de condensat 12 est évasé en direction de l'ouverture supérieure 12.2.

Comme représenté plus particulièrement sur les figures 4, 5 et 7, les orifices externes 16 comportent des orifices d'évacuation de vapeur 17, tel que des lumières d'évacuation de vapeur par exemple, disposés dans une partie arrière du couvercle 4. Chaque orifice d'évacuation de vapeur 17 est configuré pour être relié fluidiquement à la chambre de cuisson lorsque le couvercle 4 est dans la position de fermeture, et ainsi pour permettre l'évacuation d'un flux de vapeur, provenant de la chambre de cuisson, à l'extérieur de l'appareil de cuisson électrique 1.

Selon le mode de réalisation représenté sur les figures, les orifices d'évacuation de vapeur 17 sont allongés et s'étendent chacun selon un plan d'extension qui est sensiblement vertical lorsque le boîtier 2 repose sur une surface horizontale et que le couvercle 4 est dans la position de fermeture. En outre, les orifices d'évacuation de vapeur 17 comportent respectivement une extrémité inférieure 17.1 configurée pour s'étendre à l'aplomb de la portion de l'ouverture supérieure 12.2 du bac de collecte de condensat 12 lorsque le couvercle 4 est dans la position d'ouverture. Une telle configuration des orifices d'évacuation de vapeur 17 permet de récupérer les condensats s'écoulant à l'extérieur du boîtier 2, et plus précisément par l'au moins un orifice d'évacuation de vapeur 17, lorsque le couvercle 4 est dans la position d'ouverture.

Selon le mode de réalisation représenté sur les figures, l'appareil de cuisson électrique 1 comporte un circuit d'évacuation de vapeur 18 configuré pour guider le flux de vapeur depuis la chambre de cuisson jusqu'à l'au moins un orifice d'évacuation de vapeur 17 lorsque le couvercle 4 est dans la position de fermeture.

Le circuit d'évacuation de vapeur 18 est prévu dans le couvercle 4 et comporte une chambre interne 19 délimitée par le couvercle 4 et reliée fluidiquement à la chambre de cuisson. Comme représenté plus particulièrement sur la figure 5, chaque orifices d'évacuation de vapeur 17 comporte une paroi inférieure 17.2 (figure 5) qui est inclinée vers le bas et vers l'intérieur de la chambre interne 19 lorsque le couvercle 4 est dans la position de fermeture. Une telle configuration de l'invention permet avantageusement de limiter la quantité de condensat susceptible de s'écouler par le ou chaque orifice d'évacuation de vapeur 17 lorsque le couvercle 4 est dans la position de fermeture.

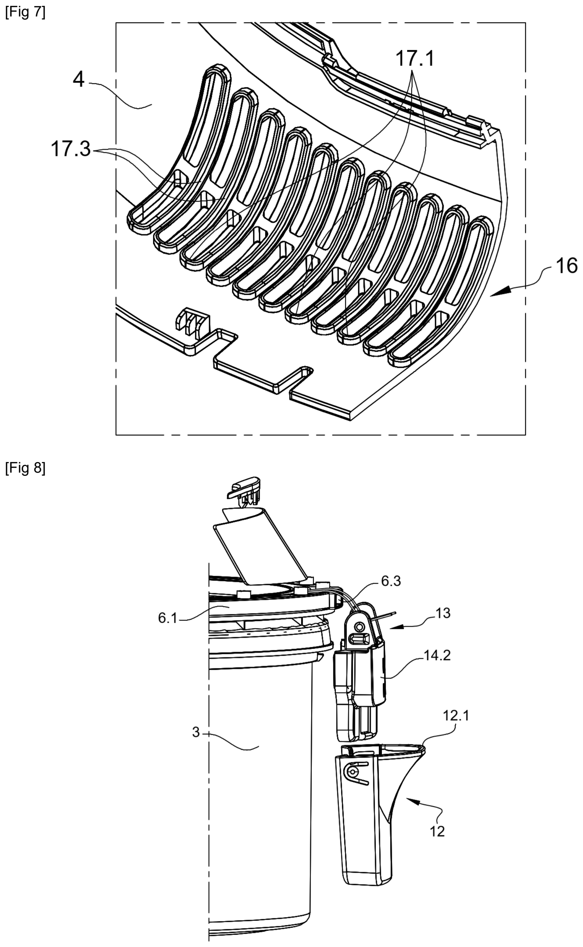

Le couvercle 4 comporte en outre des nervures périphériques 17.3 (voir figure 7) s'étendant chacune sur le pourtour d'un orifice d'évacuation de vapeur 17 respectif et configurées pour délimiter des canaux d'écoulement de condensat entre les orifices d'évacuation de vapeur 17. Les nervures périphériques 17.3 s'étendent depuis une surface interne du couvercle 4, et par exemple une surface interne de la chambre interne 19. Une telle configuration de l'appareil de cuisson électrique 1 permet avantageusement de guider les condensats jusqu'à une portion inférieure de la chambre interne 19 lorsque le couvercle 4 est dans la position d'ouverture. Les condensats provenant des canaux d'écoulement de condensat sont ensuite collectés par le circuit d'acheminement de condensat 13. Plus particulièrement, lesdits condensats sont collectés par la chambre de collecte 14.1 avant de s'écouler par l'au moins un orifice de drainage 20 dans la chambre intermédiaire 14.2, puis de rejoindre le bac de collecte de condensat 12 au travers de l'au moins un orifice de sortie inférieur 30.

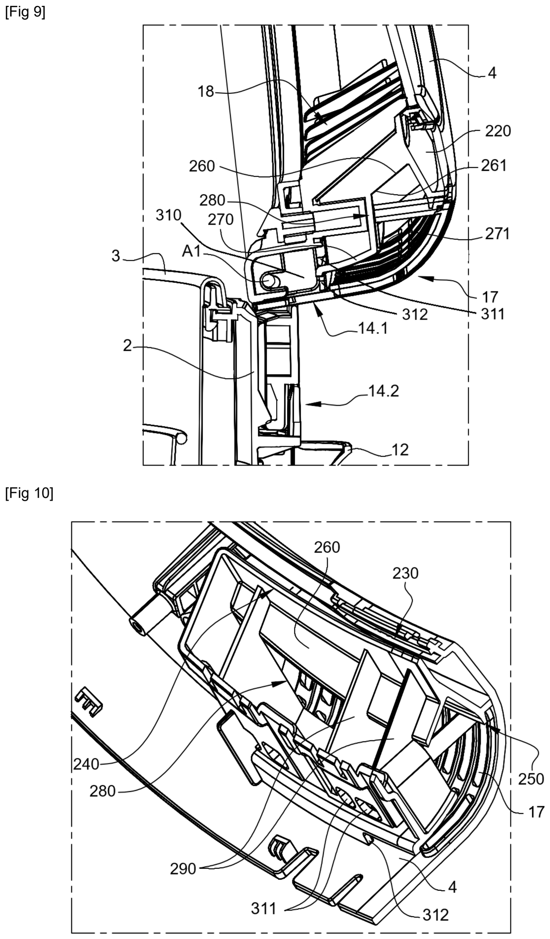

Le circuit d'évacuation de vapeur 18 comporte en outre un dispositif de guidage de flux 220 qui est monobloc, et qui est disposé dans la chambre interne 19 du couvercle 4. Le dispositif de guidage de flux 220 (voir figures 9 et 10) comporte une ouverture d'entrée de flux 240 configurée pour s'étendre en partie en regard de la chambre de cuisson et une ouverture de sortie de flux 250 configurée pour s'étendre en partie en regard des orifices d'évacuation de vapeur 17.

Avantageusement, les orifices d'évacuation de vapeur 17 débouchent dans la chambre interne 19.

Le dispositif de guidage de flux 220 comprend une paroi de guidage supérieure 260 et une paroi de guidage inférieure 270 délimitant entre elles un passage d'écoulement en chicane 280 relié fluidiquement aux orifices d'évacuation de vapeur 17. La paroi de guidage inférieure 270 s'étend depuis une paroi inférieure du dispositif de guidage de flux 220, tandis que la paroi de guidage supérieure 260 s'étend depuis une paroi supérieure du dispositif de guidage de flux 220.

La paroi de guidage supérieure 260 est plus particulièrement configurée pour s'étendre vers le bas lorsque le couvercle 4 occupe la position de fermeture et que le boîtier 2 repose sur une surface horizontale, tandis que la paroi de guidage inférieure 270 est plus particulièrement configurée pour s'étendre vers le haut lorsque le couvercle 4 occupe la position de fermeture et que le boîtier 2 repose sur une surface horizontale. De façon avantageuse, la paroi de guidage supérieure 260 et la paroi de guidage inférieure 270 sont chacune configurées pour être inclinées par rapport à l'horizontale lorsque le couvercle 4 occupe la position d'ouverture et que le boîtier repose sur une surface horizontale.

La paroi de guidage inférieure 270 est configurée pour s'étendre en partie à l'aplomb et en dessous d'un bord longitudinal inférieur 261 de la paroi de guidage supérieure 260 lorsque le couvercle 4 est dans la position d'ouverture, de telle sorte que les condensats présents sur la paroi de guidage supérieure 260 peuvent s'écouler, par gravité et depuis la paroi de guidage supérieure 260, sur la paroi de guidage inférieure 270 lorsque le couvercle 4 est dans la position d'ouverture. Une telle configuration de l'appareil de cuisson électrique permet, lorsque le couvercle 4 est déplacé dans la position d'ouverture, d'autoriser un écoulement gravitaire des condensats depuis la paroi de guidage supérieure 260 jusqu'à la paroi de guidage inférieure 270, et ainsi d'éviter un écoulement non-contrôlé des condensats dans ou à l'extérieur de l'appareil de cuisson électrique.

En outre, la présence de la paroi de guidage inférieure 270 et de la paroi de guidage supérieure 260, permet, lorsque le couvercle 4 est dans la position de fermeture, de générer un obstacle destiné à ralentir et à détourner le flux de vapeur. En particulier, le passage d'écoulement en chicane 280 permet de favoriser la séparation entre les condensats et le flux de vapeur provenant de la chambre de cuisson.

La paroi de guidage supérieure 260 et la paroi de guidage inférieure 270 sont décalées latéralement l'une par rapport à l'autre. En d'autres termes, la paroi de guidage supérieure 260 et la paroi de guidage inférieure 270 sont prévues chacune à une distance différente par rapport à un axe central de la cuve de cuisson 3, lorsque le couvercle 4 est dans la position de fermeture.

La paroi de guidage inférieure 270 comporte un bord longitudinal supérieur 271 configuré pour délimiter au moins en partie, avec le bord longitudinal inférieur 261, un orifice de passage vapeur délimitant le passage d'écoulement en chicane 280. Le bord longitudinal supérieur 271 de la paroi de guidage inférieure 270 et le bord longitudinal inférieur 261 de la paroi de guidage supérieure 260 s'étendent sensiblement dans un même plan qui est sensiblement horizontal lorsque le couvercle 4 est dans la position de fermeture. Une telle configuration de l'orifice de passage vapeur permet de détourner le flux de vapeur vers le haut afin de séparer gravitairement les condensats présents dans le flux de vapeur ; et ainsi d'augmenter significativement l'efficacité de séparation entre la vapeur et les condensats à l'intérieur du circuit d'évacuation de vapeur 18.

En outre, le dispositif de guidage de flux 220 comporte des parois de renfort 290 qui s'étendent chacune selon un plan sensiblement vertical et qui sont configurées pour assurer la tenue mécanique du dispositif de guidage de flux 220. De façon avantageuse, chaque paroi de renfort 290 relie mécaniquement la paroi de guidage inférieure 270 à la paroi de guidage supérieure 260.

Avantageusement, le dispositif de guidage de flux 220 comporte des orifices d'écoulement 310 configurés pour autoriser un écoulement des condensats à l'extérieur du dispositif de guidage de flux 220. Plus particulièrement, les orifices d'écoulement 310 sont reliés fluidiquement à la chambre de collecte 14.1 du circuit d'acheminement de condensat 13 ce qui permet ainsi de diriger les condensats depuis le dispositif de guidage de flux 220 jusqu'au bac de collecte de condensat 12. Les orifices d'écoulement 310 sont prévus à l'aplomb de la chambre de collecte 14.1, indépendamment de la position du couvercle 4.

Comme représenté sur les figures 9 et 10, les orifices d'écoulement 310 comprennent des orifices d'écoulement amont 311 prévus sur une paroi inférieure du dispositif de guidage de flux 220 et situés en amont de la paroi de guidage inférieure 270. De façon avantageuse, les orifices d'écoulement aval 311 sont adjacents à une portion inférieure de la paroi de guidage inférieure 270, de sorte à faciliter l'écoulement des condensats depuis la paroi de guidage supérieure 260 et la paroi de guidage inférieure 270 jusqu'à l'extérieur du circuit d'évacuation de vapeur 18.

En outre, les orifices d'écoulement 310 comprennent au moins un orifice d'écoulement aval 312 prévu sur la paroi inférieure du dispositif de guidage de flux 220, situé en aval de la paroi de guidage inférieure 270, et configuré pour autoriser un écoulement des condensats présents entre la paroi de guidage inférieure 270 et la surface interne du couvercle 4 en direction de la chambre de collecte 14.1.

Selon le mode de réalisation représenté sur les figures, les orifices externes 16 comportent par ailleurs des orifices de sortie latéraux 21 prévus sur le boîtier 2 et débouchant dans une surface externe, et plus précisément dans une paroi latérale de la chambre intermédiaire 14.2.

Le couvercle 4 comporte un support de charnière 22 comportant la liaison pivot. Le support de charnière 22 est monté de manière amovible sur le boîtier 2, de telle sorte que le couvercle 4 est amovible par rapport au boîtier 2. Une telle configuration de l'invention permet avantageusement un retrait du couvercle 4 afin de simplifier son nettoyage par exemple. En outre, le support de charnière 22 comporte une partie des orifices de sortie latéraux 21.

Plus spécifiquement, le support de charnière 22 comporte une première partie de fixation, et le boîtier 2 comporte une deuxième partie de fixation prévue dans la chambre intermédiaire 14.2 et configurée pour coopérer par complémentarité de forme avec la première partie de fixation. La première partie de fixation comporte par exemple au moins un doigt de fixation, et la deuxième partie de fixation comporte par exemple au moins un orifice de fixation, formé par exemple par l'un des orifices de sorties latéraux, dans lequel l'au moins un doigt de fixation est apte à être au moins en partie reçu. Une telle configuration permet avantageusement de récupérer, dans le bac de collecte de condensat 12, les condensats présents dans le circuit d'acheminement de condensat 13 et s'écoulant au travers de l'au moins un orifice de fixation.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) à bain de cuisson configuré pour la cuisson d'aliment et comportant :
- un boîtier (2) comportant une cuve de cuisson (3) configurée pour recevoir un bain de cuisson ;
- un couvercle (4) mobile autour d'un axe de pivotement (A1) entre une position d'ouverture dans laquelle le couvercle (4) autorise un accès à la cuve de cuisson (3), et une position de fermeture dans laquelle le couvercle (4) empêche l'accès à la cuve de cuisson (3) et délimite, avec la cuve de cuisson (3), une chambre de cuisson ;
- un dispositif de chauffage (50) configuré pour chauffer le bain de cuisson ; et
- un bac de collecte de condensat (12) comportant un bord périphérique supérieur (12.1) qui délimite une ouverture supérieure (12.2) ;
dans lequel le bac de collecte de condensat (12) est configuré pour faire saillie au-delà d'une paroi latérale du boîtier (2) de telle sorte qu'une portion de l'ouverture supérieure (12.2) du bac de collecte de condensat (12) est située au-delà de ladite paroi latérale du boîtier (2), le bac de collecte de condensat (12) étant configuré pour collecter des condensats s'écoulant depuis au moins un orifice externe (16) de l'appareil de cuisson électrique (1) situé à l'aplomb de ladite portion de l'ouverture supérieure (12.2) du bac de collecte de condensat (12).

2. Appareil de cuisson électrique (1) selon la revendication 1, dans lequel l'au moins un orifice externe (16) comporte au moins un orifice d'évacuation de vapeur (17) prévu sur le couvercle (4) et configuré pour être relié fluidiquement à la chambre de cuisson lorsque le couvercle (4) est dans la position de fermeture, l'au moins un orifice d'évacuation de vapeur (17) étant configuré pour s'étendre au moins en partie à l'aplomb de ladite portion de l'ouverture supérieure (12.2) du bac de collecte de condensat (12) lorsque le couvercle (4) est dans la position d'ouverture.

3. Appareil de cuisson électrique (1) selon la revendication 2, lequel comporte un circuit d'évacuation de vapeur (18) configuré pour guider un flux de vapeur, provenant de la chambre de cuisson, depuis la chambre de cuisson jusqu'à l'au moins un orifice d'évacuation de vapeur (17).

4. Appareil de cuisson électrique (1) selon la revendication 2 ou 3, dans lequel l'au moins un orifice d'évacuation de vapeur (17) est allongé et comporte une extrémité inférieure (17.1) configurée pour s'étendre à l'aplomb du bac de collecte de condensat (12) lorsque le couvercle (4) est dans la position d'ouverture.

5. Appareil de cuisson électrique (1) selon l'une quelconque des revendication 1 à 4, dans lequel l'au moins un orifice externe (16) comporte au moins un orifice de sortie latéral (21) prévu sur le boîtier (2) et débouchant dans une surface externe du boîtier (2).

6. Appareil de cuisson électrique (1) selon la revendication 5, dans lequel l'au moins un orifice de sortie latéral (21) est ménagé dans une paroi latérale du boîtier (2).

7. Appareil de cuisson électrique (1) selon l'une quelconque des revendications 1 à 6, dans lequel le bac de collecte de condensat (12) est amovible par rapport au boîtier (2).

8. Appareil de cuisson électrique (1) selon l'une quelconque des revendications 1 à 7, dans lequel le boîtier (2) comporte un logement de réception (15) configuré pour loger au moins en partie le bac de collecte de condensat (12).

9. Appareil de cuisson électrique (1) selon l'une quelconque des revendications 1 à 8, dans lequel le couvercle (4) comporte un support de charnière (22) comportant au moins en partie une liaison pivot configurée pour autoriser un pivotement du couvercle (4) entre la position de fermeture et la position d'ouverture.

10. Appareil de cuisson selon la revendication 9, dans lequel le support de charnière (22) est monté de manière amovible sur le boîtier (2), de telle sorte que le couvercle (4) est amovible par rapport au boîtier (2).

11. Appareil de cuisson électrique (1) selon l'une quelconque des revendications 1 à 10, lequel comporte :
- un dispositif de collecte (6) configuré pour s'étendre au moins en partie à l'intérieur de la chambre de cuisson et pour collecter, lorsque le couvercle (4) est dans la position de fermeture, des condensats provenant de la cuisson des aliments, le dispositif de collecte (6) comprenant au moins un orifice d'évacuation (6.3), et
- un circuit d'acheminement de condensat (13) relié fluidiquement à l'au moins un orifice d'évacuation (6.3) et configuré pour acheminer des condensats provenant de l'au moins un orifice d'évacuation (6.3) jusqu'au bac de collecte de condensat (12).

12. Appareil de cuisson électrique (1) selon la revendication 11, dans lequel l'au moins un orifice externe (16) est relié fluidiquement au circuit d'acheminement de condensat (13).

13. Appareil de cuisson électrique (1) selon la revendication 11 ou 12, dans lequel le circuit d'acheminement de condensat (13) comporte un orifice de sortie inférieur (30) configuré pour autoriser un écoulement des condensats depuis le circuit d'acheminement de condensat (13) jusque dans le bac de collecte de condensat (12).

14. Appareil de cuisson électrique (1) selon l'une quelconque des revendications 1 à 13, dans lequel le bac de collecte de condensat (12) comporte une paroi de fond (12.3), l'ouverture supérieure (12.2) du bac de collecte de condensat (12) présentant une section de passage qui est supérieure à la superficie de la paroi de fond (12.3).
